# EUROPEAN PATENT APPLICATION

(11) **EP 4 832 094 A1**
(43) Date of publication of application: **28.10.2026**
(21) Application number: 25745269.8
(22) Date of filing: 16.01.2025
(51) Int. Cl.: H01M 4/36, H01M 4/525, H01M 4/58, H01M 10/052, H01M 4/02

(54) **POSITIVE ELECTRODE MATERIAL, AND POSITIVE ELECTRODE COMPRISING SAME AND LITHIUM SECONDARY BATTERY**

(30) Priority: 22.01.2024 KR 20240009718
(71) Applicant: LG Chem, Ltd., Seoul 07336 (KR)
(72) Inventor: LEE, Won Kyun, Daejeon 34122 (KR); KWON, Oh Min, Daejeon 34122 (KR); NAM, Ki Cheon, Daejeon 34122 (KR); LEE, Seung Jun, Daejeon 34122 (KR); YANG, Ji Hye, Daejeon 34122 (KR); TAK, Jang Yeul, Daejeon 34122 (KR); JUN, In Kook, Daejeon 34122 (KR); LIM, Hyun Ju, Daejeon 34122 (KR); CHOI, Jeong Bin, Daejeon 34122 (KR)
(74) Representative: Hoffmann Eitle
(86) International application number: PCT/KR2025/099023
(87) International publication number: WO 2025/159604

(57) **Abstract**

The present invention relates to a positive electrode material that may improve performance of a lithium secondary battery, and a positive electrode and a lithium secondary battery including the same. The positive electrode material includes a first positive electrode active material having an olivine structure, and a second positive electrode active material having a layered structure, and a voltage drop (χ) according to Equation 1 described in the present specification of the first positive electrode active material falls within a specific range.

## Description

### TECHNICAL FIELD

### Cross-reference to Related Applications

This application claims priority from Korean Patent Application No. 10-2024-0009718, filed on January 22, 2024, the disclosure of which is incorporated by reference herein.

### Technical Field

The present invention relates to a positive electrode material, and a positive electrode and a lithium secondary battery including the same.

### BACKGROUND ART

Recently, as technological development and demand for mobile apparatuses and electric vehicles increase, a demand for a secondary battery as an energy source is significantly on the rise. Among such secondary batteries, a lithium secondary battery having high energy density, voltage, long lifespan, and low self-discharge rate has been commercialized and widely used.

The lithium secondary battery includes four components of a positive electrode, a negative electrode, a separator, and an electrolyte. Among the above-described components, a positive electrode active material contained in the positive electrode is a material that plays a big role in determining capacity, output, and lifespan of the battery. For the lithium secondary battery to have high energy density, output, and lifespan, improvements in performance of the positive electrode active material are necessary, and thus, in recent years, a lot of research for developing a high-performance positive electrode active material has been being conducted.

As the positive electrode active material of the lithium secondary battery, lithium transition metal oxides, such as: a lithium cobalt-based oxide such as LiCoO₂; a lithium nickel-based oxide such as LiNiO₂; a lithium manganese-based oxide such as LiMnO₂ or LiMn₂O₄; and a lithium iron phosphate-based compound such as LiFePO₄ have been developed and, recently, a lithium composite transition metal oxide which contains two or more transition metals, such as Li[NiₐCo_{b}Mn_{c}]O₂, Li[NiₐCo_{b}Al_{c}]O₂, and Li[NiₐCo_{b}Mn_{c}Al_{d}]O₂, has been developed and has been widely used.

Meanwhile, the lithium iron phosphate-based compound having an olivine structure, is a promising active material that has excellent lifespan characteristics and offers superior advantages in all safety aspects, including overcharge and overdischarge protection due to excellent structural stability.

Particularly, LiFePO₄ has excellent high-temperature stability due to strong bonding of PO₄, and is cheaper than the aforementioned LiCoO₂, LiNiO₂, or LiMn₂O₄, as LiFePO₄ contains iron, which is abundant in resources and low-cost. In addition, LiFePO₄ also has lower toxicity and thus has less impact on the environment. However, when LiFePO₄ is used as a positive electrode active material, there is a problem in that internal resistance of the battery increases due to low electrical conductivity of LiFePO₄. Therefore, the polarization potential increases in a case of the closed battery circuit, which leads to a reduction in battery capacity. In addition, since density of LiFePO₄ is lower than that of the conventional positive electrode active material, there is a limitation in that the energy density of the battery may not sufficiently increase, and LiFePO₄ is generally in a secondary particle form in which primary particles are agglomerated, thereby having large interfacial resistance between the primary particles, which causes a problem of low output characteristics.

In order to solve the issue, a use of a mixture of the lithium composite transition metal oxide and lithium iron phosphate-based compound has been tried. However, the lithium iron phosphate-based compound has a lower operating voltage than the lithium composite transition metal oxide, and thus, only lithium composite transition metal oxide operates independently in a high-voltage section. Such a problem presents issues when applied to fields where lifespan characteristics and output performance are particularly important.

### [Prior Art Document]

### [Patent document]

Japanese Patent Application Laid-open Publication No. 2002-075368

### DISCLOSURE OF THE INVENTION

### TECHNICAL PROBLEM

The present invention, for solving the above-described problem, provides a positive electrode active material capable of improving lifespan characteristics of a battery.

In addition, the present invention provides a positive electrode and a secondary battery having excellent lifespan characteristics by including the above-described positive electrode material.

### TECHNICAL SOLUTION

(1) The present invention provides a positive electrode material that includes: a first positive electrode active material having an olivine structure; and a second positive electrode active material having a layered structure, wherein the first positive electrode active material has a voltage drop (χ), according to Equation 1 below, of 0.50 V or smaller. [Equation 1] 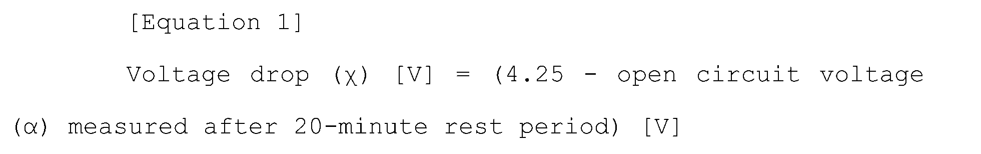 Voltage drop (χ) [V] = (4.25 - open circuit voltage (α) measured after 20-minute rest period) [V]

In Equation 1 above, α is an open-circuit voltage, as measured immediately after charging a lithium secondary battery including a positive electrode including a positive electrode active material layer that contains a positive electrode active material in an amount of 80% by weight to 98% by weight based on the total weight of the positive electrode active material layer to 4.25 V at 25°C using the CC (0.1 C) - CV (Cut off current: 0.05 C) method and having a 20-minute resting period.

(2) The positive electrode material of (1) above, wherein the first positive electrode active material includes a lithium iron phosphate-based compound having a composition represented by Formula 1 below.

[Formula 1] Li₁₊ₓFe₁₋ₐM¹ₐPO₄

In Formula 1 above, M¹ is one or more selected from Al, Mg, Ni, Co, Mn, Ti, Ga, Cu, V, Nb, Zr, Ce, In, Zn, Na, Si, Ca, B, and Y, and -0.1≤x≤0.1, and 0.0≤a≤0.8.

(3) The positive electrode material of (2) above, wherein the first positive electrode active material further includes a coating layer containing carbon (C) formed on the lithium iron phosphate-based compound.

(4) The positive electrode material of (3) above, wherein a carbon (C) content contained in the coating layer is 1.50 wt% to 5.00 wt% with respect to the total weight of the first positive electrode active material.

(5) The positive electrode material of any one among (1) to (4) above, wherein the first positive electrode active material has an average crystallite size of 80.00 nm to 150.00 nm.

(6) The positive electrode material of any one among (1) to (5) above, wherein the first positive electrode active material has an average diameter (D₅₀) of 0.30 µm to 8.00 µm.

(7) The positive electrode material of any one among (1) to (6) above, wherein a weight ratio of the first positive electrode active material and the second positive electrode active material is 10:90 to 90:10.

(8) The positive electrode material of any one among (1) to (7) above, wherein a weight ratio of the first positive electrode active material and the second positive electrode active material is 10:90 to 80:20.

(9) The positive electrode material of any one among (1) to (8) above, wherein the second positive electrode active material has a composition represented by Formula 2 below.

[Formula 2] Li_{1+y1}Niₚ₁Mn_{q1}Coᵣ₁M²ₛ₁O₂

In Formula 2 above, M² is one or more selected from Zr, Al, Re, V, Cr, Fe, Ga, Si, B, Ru, Ti, Nb, Mo, Mg, W, Na and Pt, and 0.00≤y1≤0.50, 0.00<p1<1.00, 0.00<q1<0.50, 0.00<r1<0.50, and 0.000≤s1≤0.010.

(10) The positive electrode material of any one among (1) to (10) above, wherein the second positive electrode active material has an average diameter (D₅₀) of 4 µm to 13 µm.

(11) The present invention provides a positive electrode including the positive electrode material according to any one among (1) to (10) above.

(12) The present invention provides a lithium secondary battery including the positive electrode according to (11) above.

### ADVANTAGEOUS EFFECTS

A positive electrode material according to the present invention includes: a first positive electrode active material having an olivine structure; and a second positive electrode active material having a layered structure, wherein when the first positive electrode active material meets a specific condition (the voltage drop (χ) according to Equation 1 described in the present specification is 0.50 V or smaller), a battery including the positive electrode material according to the present invention may have improved high-voltage lifespan characteristics and the like.

### BRIEF DESCRIPTION OF THE DRAWING

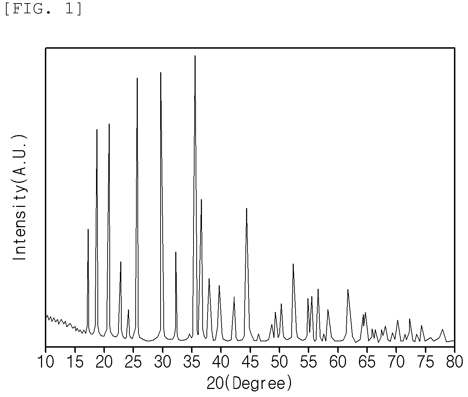

FIG. 1 is XRD data of a first positive electrode active material manufactured in Manufacturing Example 2.

### BEST MODE FOR CARRYING OUT THE INVENTION

Hereinafter, the present invention will be described in more detail to help understanding of the present invention.

It will be understood that terms or words used in the specification and claims shall not be interpreted as the meaning defined in commonly used dictionaries, and it will be further understood that the terms or words should be interpreted as having a meaning and a concept that are consistent with their meaning in the context of the relevant art and the technical idea of the invention, based on the principle that an inventor may properly define the meaning of the terms or words to best explain the invention.

In this specification, it will be further understood that the terms 'include', 'provide', 'have' or the like, specify the presence of embodied features, integers, steps, elements, or a combination thereof, but do not preclude the presence or addition of one or more other features, integers, steps, elements, or a combination thereof.

In this specification, a 'crystallite' refers to a particle unit that has substantially the same crystal orientation.

In this specification, an 'average size of crystallite' may be quantitatively analyzed using X-ray diffraction (XRD) analysis by Cu Kα radiation. Specifically, XRD data of the synthesized positive electrode active material was obtained using D8 XRD equipment of Bruker Corporation (Cu-target, voltage: 45 kV, current: 40 mA, 2θ: 10° to 80°). The structural analysis of the obtained data was performed using the Highscore software made by Malvern Panalytical Ltd., with a general structural analysis method of Rietveld refinement.

The method of Rietveld refinement is a method that involves calculating the diffraction pattern from the initial structural model that a material's crystal structure can have and comparing the calculating pattern to the measured diffraction pattern of the actual synthesized material. This method introduces various structure-related factors and iteratively adjusts their values until the two patterns match well.

This method involves assessing its validity by a difference between the calculated pattern and the measured pattern and iteratively minimizing the difference between the two patterns. The crystallite size among structure-related factors that may be applied during the process may be obtained using a full width at half maximum (FWHM) of each crystal plane's peak in the measured diffraction pattern.

In the present specification, an average particle diameter (D₅₀) may be defined as a particle diameter corresponding to 50% of a volume cumulative distribution on a particle size distribution curve for each particle (particle size distribution curve). For the average particle, target powder to be measured is dispersed in a dispersant, is introduced into a commercially available laser diffraction particle size analyzer (for example, the Mastersizer 3000 made by Malvern Ltd), when the particles pass through a laser beam, a difference in diffraction patterns based on the particle size is calculated, and the particle diameter at the point where the cumulative volume distribution reaches 50% based on particle diameter is calculated, whereas D₅₀ may be measured.

In this specification, a content ratio of each element in the lithium iron phosphate-based compound may be measured through an inductive coupled plasma (ICP) analysis using an inductively coupled plasma optical emission spectrometer (ICP-OES; Agilent 5110, Agilent Technologies).

### Positive Electrode material

Hereinafter, the positive electrode material according to the present invention will be described.

The positive electrode material according to the present invention includes: a first positive electrode active material having an olivine structure; and a second positive electrode active material having a layered structure, wherein the first positive electrode active material has a voltage drop (χ) according to Equation 1 below of 0.50 V or smaller. [Equation 1] 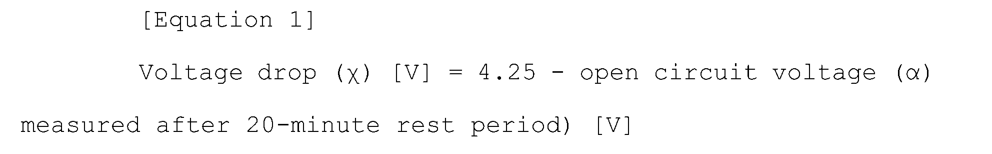 Voltage drop (χ) [V] = 4.25 - open circuit voltage (α) measured after 20-minute rest period) [V]

In Equation 1 above, α is an open-circuit voltage, measured immediately after charging a lithium secondary battery including a positive electrode including a positive electrode active material layer that contains a positive electrode active material in an amount of 80% by weight to 98% by weight based on the total weight of the positive electrode active material layer to 4.25 V at 25°C using a CC (0.1 C) - CV (Cut off current: 0.05 C) method and having a 20-minute resting period.

The inventors of the present invention found that in a case of a positive electrode material including: a first positive electrode active material having an olivine structure and a voltage drop (χ) according to Equation 1 described in the present specification of 0.50 V or smaller; and a second positive electrode active material having a layered structure, the voltage drop of the first positive electrode active material decreases from an operating voltage of the positive electrode material, and thus output characteristics, resistance characteristics, and lifespan characteristics may be improved while the first positive electrode active material and the second positive electrode active material uniformly operate during charging and discharging, thereby completing the present invention.

The voltage drop according to Equation 1 described in the present invention is determined by the combined operation of various factors such as the composition of the positive electrode material, particle size, carbon (C) content in the positive electrode active material, and average crystallite size.

Regarding Equation 1 described in the present specification, the voltage drop (χ) was calculated as a difference between 4.25 V, which is the operating voltage of the positive electrode material, and α. α is an open-circuit voltage, measured immediately after charging, to 4.25 V at 25°C, a lithium secondary battery including a positive electrode including a positive electrode active material layer that contains a positive electrode active material in an amount of 80% by weight to 98% by weight based on the total weight of the positive electrode active material layer, using the CC (0.1 C) - CV (Cut off current: 0.05 C) method, and having a 20-minute resting period. Specifically, the voltage drop of the first positive electrode active material may be calculated as a difference between 4.25 V and α, which is the open-circuit voltage measured immediately after manufacturing a lithium secondary battery including a positive electrode including a positive electrode active material layer that contains a first positive electrode active material in an amount of 90% by weight based on the total weight of the positive electrode active material layer, charging the lithium secondary battery to 4.25 V at 25°C using the CC (0.1 C) - CV (Cut off current: 0.05 C) method and having a 20-minute resting period. A smaller α value indicates a larger voltage drop from 4.25 V. When the voltage drop (χ) is 0 V, that is, α is 4.25 V, it means that no voltage drop has occurred from the open-circuit voltage, as measured immediately after charging the lithium secondary battery including a positive electrode including a positive electrode active material layer that contains a positive electrode active material in an amount of 80% by weight to 98% by weight based on the total weight of the positive electrode active material layer to 4.25 V at 25°C using the CC (0.1 C) - CV (Cut off current: 0.05 C) method and having a 20-minute resting period.

Meanwhile, the first positive electrode active material has excellent stability, but there is a problem in that resistance characteristics and output characteristics deteriorate in a high-voltage section. The second positive electrode active material has high output, but there is a case where use thereof is limited due to low stability, and there were economically disadvantageous problems. In addition, when the first positive electrode active material and the second positive electrode active material are included, but the first positive electrode active material has the voltage drop (χ) according to Equation 1 described in the present specification of greater than 0.50 V, from the operating voltage of the positive electrode material, the voltage drop of the first positive electrode active material is large, thereby acting as resistance, resulting in inferior high-voltage lifespan characteristics of the secondary battery including the positive electrode material.

Specifically, the drop voltage (χ) according to Equation 1 described in the present specification may be 0.00 V or greater, 0.10 V or greater, 0.20 V or greater, or 0.25 V or greater, and may be 0.50 V or smaller, 0.49 V or smaller, 0.48 V or smaller, 0.47 V or smaller, 0.46 V or smaller, 0.45 V or smaller, 0.44 V or smaller, 0.42 V or smaller, 0.41 V or smaller, 0.40 V or smaller, 0.39 V or smaller, 0.38 V or smaller, 0.37 V or smaller, 0.36 V or smaller, 0.35 V or smaller, or 0.34 V or smaller. When the voltage drop (χ) falls within the above-described range, from the operating voltage of the positive electrode material including the first positive electrode active material and the second positive electrode active material, the voltage drop of the first positive electrode active material decreases, the first positive electrode active material and the second positive electrode active material uniformly operate during charging and discharging, and lifespan characteristics are improved.

According to an embodiment of the present invention, the first positive electrode active material may include a lithium iron phosphate-based compound having a composition represented by Formula 1 below.

[Formula 1] Li₁₊ₓFe₁₋ₐM¹ₐPO₄

In Formula 1 above,
M¹ is one or more selected from Al, Mg, Ni, Co, Mn, Ti, Ga, Cu, V, Nb, Zr, Ce, In, Zn, Na, Si, Ca, B, and Y, and
-0.1≤x≤0.1, and 0.0≤a≤0.8.

M¹ is a doping element, and specifically, M¹ is one or more selected from Al, Mg, Ni, Co, Mn, Ti, Ga, Cu, V, Nb, Zr, Ce, In, Zn, Na, Si, Ca, B, and Y. M1 above is not necessarily included, but when included in a suitable amount, a particle shape of the positive electrode active material, and stability of a crystal structure are improved, which may improve rate characteristics and the like of the secondary battery applying the same.

Meanwhile, x above may be -0.1 or more, or 0.0 or more, and may be 0.05 or less, or 0.1 or less. When x falls within the above-described range, structural stability may be improved.

a may be 0.0 or more, 0.1 or more, or 0.2 or more, and a may be 0.3 or less, 0.4 or less, or 0.8 or less. When a falls within the above-described range, high energy density is exhibited, which achieves high-capacity characteristics.

According to an embodiment of the present invention, the first positive electrode active material may further include the coating layer containing carbon (C), formed on the lithium iron phosphate-based compound. Since the coating layer containing carbon (C) is further included, electronic conductivity of the positive electrode active material may be improved.

Meanwhile, the carbon (C) content included in the coating layer may be 1.50 wt% to 5.00 wt% based on the total weight of the first positive electrode active material. Specifically, the amount of carbon (C) contained in the coating layer may be 1.50 wt% or more, or 2.00 wt% more. In addition, the amount of carbon (C) contained in the coating layer may be 3.00 % by weight or less, 3.50 % by weight or less, 4.00 % by weight or less, or 5.00 % by weight or less. Specifically, the carbon (C) content included in the coating layer may be 1.50 wt% or more, or 2.00 wt% more, and may be 3.00 % by weight or less, 3.50 % by weight or less, 4.00 % by weight or less, or 5.00 % by weight or less.

According to an embodiment of the present invention, the first positive electrode active material may have an average size of crystallite of about 80.00 nm to about 150.00 nm. Specifically, the first positive electrode active material may have an average crystallite size of 80.00 nm or greater, 90.00 nm greater, or 94.00 nm greater, and may have the average crystallite size of 97.00 nm or smaller, 100.00 nm or smaller, 120.00 nm or smaller, or 150.00 nm or smaller. When the average crystallite size falls within the above-described range, capacity characteristics and rate characteristics of the positive electrode active material may be improved.

According to an embodiment of the present invention, the first positive electrode active material may have an average particle diameter (D₅₀) of 0.30 µm to 8.0 µm. The average particle diameter (D₅₀) of the first positive electrode active material may be 0.30 µm or greater, or 1.00 µm or greater, and may be 6.50 µm or smaller, 7.00 µm or smaller, 7.50 µm or smaller, or 8.00µm or smaller. When the average particle diameter (D₅₀) of the first positive electrode active material falls within the above-described range, electrode density may increase.

According to an embodiment of the present invention, a weight ratio of the first positive electrode active material and the second positive electrode active material may be 10:90 to 90:10. Specifically, the weight ratio may be 10:90 to 90:10, 10:90 to 80:20, 20:80 to 90:10, 20:80 to 80:20, 30:70 to 90:10, 30:70 to 80:20, 40:60 to 90:10, or 40:60 to 80:20. When the weight ratio falls within the above-described range, resistance and output characteristics at a high-voltage may be excellent while improving stability. The operating voltages of the first positive electrode active material and the second positive electrode active material vary. Particularly, when the weight ratio of the first positive electrode active material and the second positive electrode active material is 10:90 to 80:20, since the voltage drop of the first positive electrode active material from the operating voltage of the positive electrode material decreases, while the first positive electrode active material and the second electrode active material uniformly operate during charging and discharging of the battery, and lifespan characteristics and the like may be improved.

According to an embodiment of the present invention, the second positive electrode active material may have a composition represented by Formula 2 below.

[Formula 2] Li_{1+y1}Niₚ₁Mn_{q1}Coᵣ₁M²ₛ₁O₂

In Formula 2 above,
M² is one or more selected from Zr, Al, Re, V, Cr, Fe, Ga, Si, B, Ru, Ti, Nb, Mo, Mg, W, Na and Pt, and
0.00≤y1≤0.50, 0.00<p1<1.00, 0.00<q1<0.50, 0.00<r1<0.50, and 0.000≤s1≤0.010.

M² above is a doping element, and specifically M² above is one or more selected from Zr, Al, Re, V, Cr, Fe, Ga, Si, B, Ru, Ti, Nb, Mo, Mg, W, Na and Pt. M2 above is not necessarily included, but when included in a suitable amount, a particle shape of the positive electrode active material, and stability of a crystal structure may be improved.

Meanwhile, y1 may be 0.00 or more, 0.10 or more, or 0.20 or more, and may be 0.30 or less, 0.40 or less, or 0.50 or less. When y1 falls within the above-described range, high-capacity characteristics and high energy density per unit volume may be achieved.

The p1 is a molar ratio of nickel (Ni) to the total metals other than lithium, which may be greater than 0.00, 0.20 or greater, 0.40 or greater, 0.50 or greater, 0.60 or greater, 0.70 or greater, or 0.80 or greater, and may be 0.90 or less, or less than 1.00. When the p1 falls within the above-described range, high energy density is exhibited, which may achieve high-capacity characteristics.

The q1 is a molar ratio of manganese (Mn) to the total metals other than lithium, which may be greater than 0.00, and may be 0.20 or less, 0.30 or less. 0.40 or less, or less than 0.50. When the q1 falls within the above-described range, high-capacity characteristics may be achieved. In addition, high-temperature stability may increase, and decomposition reaction of the electrolyte solution may relatively decrease.

The r1 is a molar ratio of cobalt (Co) to the total metals other than lithium in the lithium composite transition metal oxide, which may be greater than 0.00, and may be 0.10 or less, 0.20 or less, 0.30 or less, 0.40 or less, or less th an 0.50. When the r1 falls within the above-described range, structural stability may be improved.

The s1 is a molar ratio of M² to the total metals other than lithium in the lithium composite transition metal oxide, which may be 0.002 or greater, 0.002 or greater, or 0.004 or greater, and may be 0.006 or less, 0.008 or less, or 0.010 or less. When s1 falls within the above-described range, a particle shape may be improved, and stability of a crystal structure may be improved.

The p1, q1, r1, and s1 may satisfy p1+q1+r1+s1=1.

According to an embodiment of the present invention, the second positive electrode active material may have an average particle diameter (D₅₀) of 4 µm to 13 µm. Specifically, the average particle diameter (D₅₀) of the second positive electrode active material may be 4 µm or greater, 5 µm or greater, 6 µm or greater, 7 µm or greater, 8 µm or greater, or 9 µm or greater, and may be 10 µm or less, 11 µm or less, 12 µm or less, or 13 µm or less. When the second positive electrode active material has the average particle diameter (D₅₀) within the above-described range, electrode density may be improved by adjusting the average particle diameter (D₅₀) of the first positive electrode active material and the average particle diameter (D₅₀) of the second positive electrode active material.

The first positive electrode active material of the present invention may be manufactured according to a known method in the related art. For example, the first positive electrode active material may be manufactured by sintering a precursor and a lithium raw material.

Specifically, the first positive electrode active material according to the present invention may be manufactured by a method for manufacturing a first positive electrode active material including a lithium iron phosphate-based compound, the method including (a) mixing a lithium-containing raw material and iron phosphate (FePO₄) to prepare a mixture; and (b) sintering the mixture.

A lithium-containing sulfate, nitrate, acetate, carbonate, oxalate, citrate, halide, hydroxide, oxyhydroxide, or the like may be used as the lithium-containing raw material, and the lithium-containing raw material is not particularly limited as long as it is capable of being dissolved into water. Specifically, the lithium-containing raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or the like, and any one or a mixture of two or more thereof may be used.

During the manufacturing of the mixture in the step (a), a doping element-containing raw material, for example, a manganese-containing raw material and the like may be further mixed.

According to the present invention, the lithium-containing raw material and iron phosphate (FePO₄) used in the step (a) may be mixed in an amount to obtain a compound having a composition represented by Formula 1 described in the present specification.

After step (a) above, additionally mixing a carbon-containing coating raw material may be included.

The carbon-containing raw material for coating may be one or more selected from sucrose, glucose, polyethylene glycol, polyvinyl alcohol, and polyvinyl acetate.

The carbon-containing coating raw material may be contained in an amount of 1.5 wt% to 5 wt% with respect to the total weight of the first positive electrode active material.

In the step (b), the mixture may be sintered at 500 °C to 1000 °C to manufacture a lithium iron phosphate-based compound.

The first positive electrode active material manufactured according to the method for manufacturing a first positive electrode active material may have a composition represented by Formula 1 described in the present specification.

The first positive electrode active material manufactured by the method for manufacturing a first positive electrode active material may include a coating layer containing carbon (C) formed on the lithium iron phosphate-based compound.

The second positive electrode active material of the present invention may be manufactured according to a known method in the related art. For example, the second positive electrode active material may be manufactured by sintering a positive electrode active material precursor and a lithium-containing raw material.

Specifically, the second positive electrode active material may be manufactured by the method for manufacturing a second positive electrode active material, the method including: (A) mixing the positive electrode active material precursor, which is a composite transition metal hydroxide, a composite transition metal oxyhydroxide, or a combination thereof, and a lithium-containing raw material to manufacture a mixture; and (B) sintering the mixture to manufacture a lithium composite transition metal oxide.

A lithium-containing sulfate, nitrate, acetate, carbonate, oxalate, citrate, halide, hydroxide, oxyhydroxide, or the like may be used as the lithium-containing raw material, and the lithium-containing raw material is not particularly limited as long as it is capable of being dissolved into water. Specifically, as the lithium-containing raw material, Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or the like, and any one or a mixture of two or more thereof may be used.

The composite transition metal hydroxide, the composite transition metal oxyhydroxide, or a combination thereof, and the lithium-containing raw material may be mixed such that a ratio (Li/M") of the number of moles of lithium (Li) contained in the lithium-containing raw material to the total number of moles (M'') of transition metals contained in the composite transition metal hydroxide, the composite transition metal oxyhydroxide, or a combination thereof is 1.00 or greater, 1.01 or greater, 1.02 or greater, 1.03 or greater, 1.04 or greater, 1.05 or greater, and may be 1.06 or smaller, 1.07 or smaller, 1.08 or smaller, 1.09 or smaller, or 1.10 or smaller.

During the manufacturing of the mixture in step (A) above, a doping element-containing raw material, for example, an aluminum-containing raw material, a zirconium-containing raw material, or a yttrium-containing raw material may be further included.

According to an embodiment of the present invention, in step (A) above, the composite transition metal hydroxide containing cobalt, nickel, and manganese, the lithium (Li)-containing raw material, and the doping element-containing raw material may be mixed in amounts to have a composition represented by Formula 2 described in the present invention.

In the step (B), the mixture may be sintered at 700 °C to 1000 °C to manufacture a lithium composite transition metal oxide.

The sintering may be performed under an oxygen atmosphere.

The second positive electrode active material manufactured according to the method for manufacturing a second positive electrode active material may have a composition represented by Formula 2 described in the present specification.

A positive electrode material of the present invention may be manufactured according to a known method in the related art. Specifically, the positive electrode material may be manufactured by mixing the first positive electrode active material and the second positive electrode active material.

### Positive electrode

Hereinafter, the positive electrode according to the present invention will be described.

The positive electrode according to the present invention includes a positive electrode active material layer including the positive electrode material according to the present invention. Specifically, the positive electrode includes: a positive electrode current collector; and a positive electrode active material layer formed on the positive electrode current collector and including the positive electrode material. Since the positive electrode material has been described in detail, the specific explanation will be omitted, and hereinafter, only the rest components will be described in detail.

The positive electrode current collector is not particularly limited as long as it does not cause a chemical change in the battery while having conductivity, and for example copper, stainless steel, aluminum, nickel, titanium, sintered carbon, or aluminum or stainless steel that is surface-treated with carbon, nickel, titanium, silver, etc., may be used. In addition, the positive electrode current collector may have a thickness of 3 µm to 500 µm, fine irregularities may be formed on a surface of the current collector, and thus adhesion of the positive electrode active material may increase. For example, the positive electrode current collector may be used in various forms such as a film, a sheet, a foil, a net, a porous material, a foam, a non-woven fabric material.

The positive electrode active material may include a conductive material, and a binder, in addition to the positive electrode material. In this case, the positive electrode active material may be included in an amount of 80 % by weight to 99 % by weight, and more specifically 85 % by weight to 98.5 % by weight based on the total weight of the positive electrode active material layer, and when the amount of the positive electrode active material falls within the above-described range, excellent capacity characteristics may be exhibited.

The conductive material is used for imparting conductivity to the electrode, and any conductive material may be used without particular limitation as long as it has electronic conductivity without causing a chemical change in the constituted battery. Specific examples may be graphite such as natural graphite or artificial graphite; a carbon-based material including carbon black, acetylene black, Ketjen black, channel black, furnace black, lamp black, thermal black, a carbon fiber, a carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The conductive material may be included in an amount of 0.1 % by weight to 15% by weight based on the total weight of the positive electrode active material layer.

The binder may serve to improve binding between positive electrode active material particles and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), fluorine rubber, or various copolymers thereof, and any one alone or a mixture of two or more thereof may be used. The binder may be included in an amount of 0.1 % by weight to 15% by weight based on the total weight of the positive electrode active material layer.

The positive electrode may be manufactured by the known method for manufacturing a positive electrode except for using the positive electrode described previously. Specifically, the positive electrode may be manufactured by applying the composition for forming the positive electrode active material layer, which is manufactured by dissolving or dispersing the positive electrode material and, selectively, the binder and the conductive material in a solvent, onto the positive electrode current collector, then drying and rolling. The types and amounts of the positive electrode, the binder, and the conductive material are the same as described previously. Additionally, in another way, the positive electrode may be manufactured by casting the composition for forming the positive electrode active material layer onto a separate support and then laminating a film separated from the support on the positive electrode current collector.

The solvent may be a solvent generally used in the art to which technologies of the present invention pertain, and may be dimethyl sulfoxide (DMSO), isopropyl alcohol, N-methyl-2-pyrrolidone (NMP), acetone, water, or the like, and any one alone or a mixture of two or more thereof may be used. A usage amount of the solvent is sufficient to have a viscosity that may dissolve or disperse the positive electrode active material, the conductive material, and the binder, and then, during the applying for manufacturing a positive electrode, may exhibit excellent thickness uniformity.

### Lithium secondary battery

Hereinafter a lithium secondary battery according to the present invention will be described.

The present invention may manufacture an electrochemical device including the positive electrode. The electrochemical device may specifically be a battery, a capacitor, etc., and more specifically, may be a lithium secondary battery.

The lithium secondary battery, specifically, includes a positive electrode, a negative electrode located facing the positive electrode, and a separator and an electrolyte provided between the positive electrode and the negative electrode, the positive electrode is the same as described previously, thus specific explanation will be omitted, and hereinafter, only the other components will be described in detail.

In addition, the lithium secondary battery may further include a battery case that accommodates an electrode assembly of the positive electrode, the negative electrode, and the separator, and a sealing member that seals the electrode case, selectively.

In the lithium secondary battery, the negative electrode includes a negative current collector, and a negative electrode active material layer on the negative electrode current collector.

The negative electrode current collector is not particularly limited as long as it does not cause a chemical change in the battery while having conductivity, and for example copper, stainless steel, aluminum, nickel, titanium, sintered carbon, or aluminum or stainless steel that is surface-treated with carbon, nickel, titanium, silver, etc., an alloy of aluminum-cadmium, and the like may be used. In addition, the negative electrode current collector may have a thickness of, usually, 3 µm to 500 µm, fine irregularities may be formed on a surface of the current collector, and thus adhesion of the negative electrode active material may increase. For example, the negative electrode current collector may be used in various shapes such as a film, a foil, a net, a porous material, a foam, or a non-woven material.

The negative electrode active material layer selectively includes a binder and a conductive material in addition to the negative electrode active material.

A compound capable of reversible intercalation and deintercalation of lithium may be used as the negative electrode active material. Particular examples of the negative electrode active material may include a carbonaceous material such as artificial graphite, natural graphite, a graphitized carbon fiber, and amorphous carbon; a metallic material capable of alloying with lithium such as Si, Al, Sn, Pb, Zn, Bi, In, Mg, Ga, Cd, a Si alloy, a Sn alloy, or an Al alloy; a metal oxide that may be doped and de-doped with lithium, such as vanadium oxide and lithium vanadium oxide; a composite including the metallic compound and the carbonaceous material such as a Si-C composite, or a Sn-C composite; and the like, and any one thereof or a mixture of two or more thereof may be used. In addition, a metal lithium thin film may be used as the negative electrode active material. Also, low-crystallinity carbon and high-crystallinity carbon and the like may be used as the carbon material. Typical examples of the low-crystalline carbon may be soft carbon and hard carbon, and typical examples of the high-crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 % by weight to 99 % by weight based on the total weight of the negative electrode active material layer.

The binder is a component that helps bonding between the conductive material, the active material, and the current collector, and may be usually included in an amount of 0,1 wt% to 10 wt% based on the total weight of the negative electrode active material layer. Examples of such a binder, may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polyethylene, polypropylene, ethylene-propylene-diene polymer (EPDM), sulfonated EPDM, styrene-butadiene rubber, nitrile-butadiene rubber, fluorine rubber, various copolymers thereof, etc.

The conductive material is a component for further improving conductivity of the negative electrode active material and may be added in an amount of 10 % by weight or less, and specifically 5 % by weight or less, based on the total weight of the negative electrode active material layer. The conductive material is not particularly limited as long as it has conductivity without causing chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode active material layer may be manufactured by applying a composition for forming a negative electrode active material layer manufactured by dissolving or dispersing, in a solvent, the negative electrode active material and, selectively, the binder and the conductive material onto a negative electrode current collector, followed by drying, or by casting the composition for forming a negative electrode active material layer onto a separate support, and then laminating a film obtained by peeling from the support, onto the negative electrode current collector.

Meanwhile, for the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability of an electrolyte solution as well as low resistance against the move of electrolyte ions is preferable. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of a high melting point glass fiber, polyethylene terephthalate fiber, or the like may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc., which may be used in the manufacturing of the lithium secondary battery, but the present invention is not limited thereto.

Specifically, the electrolyte may include an organic solvent and a lithium salt.

Any organic solvent may be used as the organic solvent without particular limitation as long as it serves as a medium that allows ions involved in the electrochemical reactions of the battery to move. Specifically, as the organic solvent, an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene, or fluorobenzene; a carbonate-based solvent such as dimethylcarbonate (DMC), diethylcarbonate (DEC), ethylmethylcarbonate (EMC), ethylene carbonate (EC), or propylene carbonate (PC); an alcohol-based solvent such as ethyl alcohol, or isopropyl alcohol; nitriles such as R-CN (R is a C₂ to C₂₀ hydrocarbon group having a linear, branched, or cyclic structure, and may include a double bond aromatic ring, or an ether bond); amides such as dimethylformamide; dioxolanes such as 1,3-dioxolane; sulfolanes; etc., may be used. Among these, as the organic solvent, the carbonate-based solvent is preferable. In addition, as the organic solvent, a mixture of a cyclic carbonate-based compound and a linear carbonate-based compound is more preferable, the cyclic carbonate-based compound (for example, ethylene carbonate, propylene carbonate, etc.) having a high viscosity and a high dielectric constant, which may increase charge and discharge capacity of the battery, and the linear carbonate-based compound (for example, ethyl methyl carbonate, dimethyl carbonate, diethyl carbonate, etc.) having a low viscosity. In this case, when the cyclic carbonate and the chain carbonate are mixed at a volume ratio of about 1: 9, the electrolyte solution may have excellent performance.

Any lithium salt may be used without particular limitation as long as it may provide lithium ions used in the lithium secondary battery. Specifically, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂, or the like may be used as the lithium salt. The lithium salt may be used in a concentration range of 0.1 to 5.0 M, and specifically, 0.1 to 3.0 M. When the concentration of the lithium salt falls within the above-described range, the electrolyte has an appropriate conductivity and viscosity, and thus excellent electrolyte performance may be exhibited, and lithium ions may effectively move.

In addition to the electrolyte, for improving lifespan characteristics of batteries, preventing reduction in battery capacity, and increasing battery discharge capacity, the electrolyte may further include one or more additives such as a haloalkylene carbonate-based compound such as difluoroethylene carbonate, pyridine, triethyl phosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrol, 2-methoxy ethanol or aluminum trichloride. In this case, the additive may be included in an amount of 0.1 to 10 % by weight, and specifically, 0.1 to 5 % by weight, based on the total weight of the electrolyte.

As described above, the lithium secondary battery including the positive electrode material according to the present invention exhibits excellent resistance characteristics, and thus is useful in fields of: portable devices such as mobile phones, laptops, computers, and digital cameras; and electric vehicles such as hybrid electric vehicle (HEV); etc.

Therefore, according to another embodiment of the present invention, a battery module including the lithium secondary battery as a unit cell, and a battery pack including the same are provided.

The battery module, or battery pack may be used as a power supply for medium- or large-sized devices of any one or more among: a power tool; electric cars including an electric vehicle (EV), a hybrid electric vehicle, and a plug-in hybrid electric vehicle (PHEV); or a power storage system.

An appearance of the lithium secondary battery according to the present invention is not particularly limited, but it may be cylindrical using a can, prismatic, pouch-type, or coin-type.

The lithium secondary battery according to the present invention may be not only used in a battery cell which is used for a power supply for a small-sized device, but also may be preferably used as a unit cell in a medium- and large-sized battery module including multiple battery cells.

Hereinafter, the embodiments of the present invention will be described in detail to enable those skilled in the related art to which the present invention pertains to easily implement the same. However, the present invention may be implemented in various forms and is not limited to the embodiments described herein.

### MODE FOR CARRYING OUT THE INVENTION

### Manufacturing Examples

### Manufacturing Example 1

Li₂CO₃ and FePO₄ were mixed such that a molar ratio of Li:Fe is 1.05:1, mixed with water such that a concentration of solid powder is 20 wt%, and then subject to a wet grinding with a bead mill to manufacture a slurry (D₅₀: 200 nm). Thereafter, the slurry was mixed with sucrose to manufacture a mixture. In this case, sucrose is mixed in an amount of 12% by weight based on the total weight of Li₂CO₃ and FePO₄.

The mixture was spray dried (inlet temperature 230°C, outlet temperature 95°C), then sintered under a nitrogen atmosphere for 10 hours at 700 °C to manufacture a first positive electrode active material on which a coating layer containing carbon (C) on a lithium iron phosphate-based compound that had a composition represented by LiFePO₄ was formed.

### Manufacturing Example 2

A first positive electrode active material, on which a coating layer containing carbon (C) on a lithium iron phosphate-based compound that has a composition represented by LiFePO₄ was formed, was manufactured in the same manner as Manufacturing Example 1 except that the mixture was pulverized using a Jet-mill after spray drying (inlet temperature 230°C, outlet temperature 95°C), and then sintering under a nitrogen atmosphere for 10 hours at 700 °C.

### Manufacturing Example 3

A first positive electrode active material, on which a coating layer including carbon (C) on a lithium iron phosphate-based compound that has a composition represented by LiFePO₄ was formed, was manufactured in the same manner as Manufacturing Example 1, except that sucrose was mixed in an amount of 10 % by weight based on the total weight of Li₂CO₃ and FePO₄, then the mixture was spray dried (inlet temperature 230°C, outlet temperature 95°C), and then was sintered under a nitrogen atmosphere for 10 hours at 700 °C.

### Manufacturing Example 4

A first positive electrode active material, on which a coating layer including carbon (C) on a lithium iron phosphate-based compound that has a composition represented by LiFePO₄ was formed, was manufactured in the same manner as Manufacturing Example 3 except that the mixture was pulverized using a Jet-mill after spray drying (inlet temperature 230°C, outlet temperature 95°C), and then sintering under a nitrogen atmosphere for 10 hours at 700 °C.

### Manufacturing Example 5

A first positive electrode active material, on which a coating layer including carbon (C) on a lithium iron phosphate-based compound that has a composition represented by LiFePO₄ was formed, was manufactured in the same manner as Manufacturing Example 1, except that sucrose was mixed in an amount of 6 % by weight based on the total weight of Li₂CO₃ and FePO₄, then the mixture was spray dried (inlet temperature 230°C, outlet temperature 95°C), and then was sintered under a nitrogen atmosphere for 10 hours at 750 °C.

### Manufacturing Example 6

A first positive electrode active material, on which a coating layer including carbon (C) on a lithium iron phosphate-based compound that had a composition represented by LiFePO₄, was manufactured in the same manner as Manufacturing Example 5 except that the mixture was pulverized using a Jet-mill after spray drying (inlet temperature 230°C, outlet temperature 95°C), and then sintered under a nitrogen atmosphere for 10 hours at 750 °C.

### Examples and Comparative Examples

### Example 1

A second positive electrode active material having a composition represented by Li_{1.03}Ni_{0.86}Mn_{0.07}Co_{0.05}Al_{0.02}O₂ (Manufacturer: LG Chem, D₅₀: 10 µm, secondary particle form) was prepared.

The first positive electrode active material manufactured in Manufacturing Example 1 and the second positive electrode active material were mixed such that a weight ratio is 40:60 to manufacture a positive electrode material.

### Example 2

A positive electrode material was manufactured in the same manner as Example 1, except that the first positive electrode active material and the second positive electrode active material were mixed such that the weight ratio is 80:20 to manufacture a positive electrode material.

### Example 3

A second positive electrode active material having a composition represented by Li_{1.03}Ni_{0.86}Mn_{0.07}Co_{0.05}Al_{0.02}O₂ (Manufacturer: LG Chem, D₅₀: 10 µm, secondary particle form) was prepared.

The first positive electrode active material manufactured in Manufacturing Example 2 and the second positive electrode active material were mixed such that a weight ratio is 40:60 to manufacture a positive electrode material.

### Example 4

A positive electrode material was manufactured in the same manner as Example 3, except that the first positive electrode active material and the second positive electrode active material were mixed such that the weight ratio is 80:20 to manufacture a positive electrode material.

### Example 5

A second positive electrode active material having a composition represented by Li_{1.03}Ni_{0.81}Mn_{0.12}Co_{0.05}Al_{0.02}O₂ (Manufacturer: LG Chem, D₅₀: 4 µm, secondary particle form) was prepared.

The first positive electrode active material manufactured in Manufacturing Example 2 and the second positive electrode active material were mixed such that a weight ratio is 40:60 to manufacture a positive electrode material.

### Example 6

A positive electrode material was manufactured in the same manner as Example 5, except that the first positive electrode active material and the second positive electrode active material were mixed such that the weight ratio is 80:20 to manufacture the positive electrode material.

### Example 7

A second positive electrode active material having a composition represented by Li_{1.03}Ni_{0.86}Mn_{0.07}Co_{0.05}Al_{0.02}O₂ (Manufacturer: LG Chem, D₅₀: 10 µm, secondary particle form) was prepared.

The first positive electrode active material manufactured in Manufacturing Example 3 and the second positive electrode active material were mixed such that a weight ratio is 40:60 to manufacture a positive electrode material.

### Example 8

A second positive electrode active material having a composition represented by Li_{1.03}Ni_{0.86}Mn_{0.07}Co_{0.05}Al_{0.02}O₂ (Manufacturer: LG Chem, D₅₀: 10 µm, secondary particle form) was prepared.

The first positive electrode active material manufactured in Manufacturing Example 4 and the second positive electrode active material were mixed such that a weight ratio is 40:60 to manufacture a positive electrode material.

### Example 9

A positive electrode material was manufactured in the same manner as Manufacturing Example 3 except that the first positive electrode active material and the second positive electrode active material were mixed such that the weight ratio is 90:10 to manufacture a positive electrode material.

### Comparative Example 1

A second positive electrode active material having a composition represented by Li_{1.03}Ni_{0.86}Mn_{0.07}Co_{0.05}Al_{0.02}O₂ (Manufacturer: LG Chem, D₅₀: 10 µm, secondary particle form) was prepared.

The first positive electrode active material manufactured in Manufacturing Example 5 and the second positive electrode active material were mixed such that a weight ratio is 40:60 to manufacture a positive electrode material.

### Comparative Example 2

The positive electrode material was manufactured in the same manner as Comparative Example 1 except that the first positive electrode active material and the second positive electrode active material were mixed such that a weight ratio is 80:20.

### Comparative Example 3

A second positive electrode active material having a composition represented by Li_{1.03}Ni_{0.86}Mn_{0.07}Co_{0.05}Al_{0.02}O₂ (Manufacturer: LG Chem, D₅₀: 10 µm, secondary particle form) was prepared.

The first positive electrode active material manufactured in Manufacturing Example 6 and the second positive electrode active material were mixed such that a weight ratio is 40:60 to manufacture a positive electrode material.

### Comparative Example 4

The positive electrode material was manufactured in the same manner as Comparative Example 3 except that the first positive electrode active material and the second positive electrode active material were mixed at a weight ratio of 80:20.

### Comparative Example 5

The first positive electrode active material in Manufacturing Example 2 was used as the positive electrode material in Comparative Example 6.

### Experimental Example

### Experimental Example 1: XRD analysis

XRD analysis was performed on each first positive electrode active material used in all examples, XRD data of the first positive electrode active material manufactured according to Manufacturing Example 2 is shown in FIG. 2, and a size (nm) of the average crystallite of the first positive electrode active materials used in all examples are listed in Table 3 below.

In this case, the XRD measurement was carried out using D8 XRD made by Bruker by taking 2 g to 3 g of the positive electrode active material particles from the positive electrode active material powder under conditions of Cu-Kα radiation (wavelength 1.54 Å), an accelerating voltage of 45 kV, and a current of 40 mA with a scanning speed of 0.2°/sec in 2θ range of 10° to 80°.

FIG. 1 is XRD data of the first positive electrode active material manufactured according to Manufacturing Example 2.

With reference to FIG. 1, it is confirmed that the first positive electrode active material manufactured in Manufacturing Example 2 includes an olivine structure.

### Experimental Example 2: Battery characteristic evaluation 1

### Manufacture of coin-type half-cell

The first positive electrode active material of 90% by weight, which is used in all examples, carbon black 5.0% by weight as a conductive material, and polyvinylidene fluoride (PVDF) of 5.0% by weight as a binder were mixed in a N-methyl-2-pyrrolidone (NMP) solvent to manufacture a positive electrode slurry. The manufactured positive electrode slurry was applied onto one side of an aluminum current collector, then dried at 130 °C, and then rolled to manufacture a positive electrode.

A lithium metal electrode was used as a negative electrode, and a porous polyethylene separator was provided between the positive electrode and the negative electrode to manufacture an electrode assembly. The electrode assembly was located inside a battery case, and an electrolyte solution containing 1.0 M of LiPF₆ dissolved in an organic solvent, in which ethylene carbonate (EC): ethyl methyl carbonate (EMC): diethyl carbonate (DEC) were mixed at a volume ratio of 3:4:3, was injected to manufacture a coin-type half-cell.

### Battery characteristic evaluation 1

At 25°C, an initial charge and discharge process was performed by charging to 3.65 V using a CC (0.1 C) - CV (Cut off current: 0.05 C) method, followed by a 20-minute resting period, and then discharging to 2.5 V using a CC (0.1 C) method, during which an open-circuit voltage (OCV) was measured. The measured open-circuit voltage at 3.65 V was listed in Table 1 below.

As described above, at 25°C, after performing the initial charge and discharge process, the open-circuit voltage (OCV) was measured by charging to 4.25 V using a CC (0.1 C) - CV (Cut off current: 0.05 C) method, followed by a 20-minute resting period, and then discharging to 2.5 V using a CC (0.1 C) method. The measured open-circuit voltage at 4.25 V was listed in Table 2 below.

**[Table 1]**

| Classification | Open circuit voltage [V] | |
|---|---|---|
| | @ 3.65V | @3.65V |
| | | Voltage drop [V] |
| Manufacturing Example 1 | 3.540 | 0.11 |
| Manufacturing Example 2 | 3.534 | 0.116 |
| Manufacturing Example 3 | 3.551 | 0.099 |
| Manufacturing Example 4 | 3.545 | 0.105 |
| Manufacturing Example 5 | 3.447 | 0.203 |
| Manufacturing Example 6 | 3.435 | 0.215 |

**[Table 2]**

| Classification | Open circuit voltage [V] | | @4.25V |
|---|---|---|---|
| | @ 4.25V | @4.25V | Whether voltage drop is 0.5 V or less, or not |
| | | Voltage drop (χ) [V] | |
| Manufacturing Example 1 | 3.963 | 0.287 | ○ |
| Manufacturing Example 2 | 3.960 | 0.290 | ○ |
| Manufacturing Example 3 | 3.917 | 0.333 | ○ |
| Manufacturing Example 4 | 3.915 | 0.335 | ○ |
| Manufacturing Example 5 | 3.735 | 0.515 | X |
| Manufacturing Example 6 | 3.721 | 0.529 | X |

With reference to Table 1 and Table 2, it was confirmed that the open-circuit voltage drop of the first positive electrode active material manufactured in the manufacturing example from 3.65 V was about 0.099 V to 0.215 V, as measured by the method described in the present specification, and the open-circuit voltage drop from 4.25 V, as measured by the method described in the present specification was about 0.28 V to 0.53 V. Therefore, it was confirmed that the open-circuit voltage drop from 4.25 V was larger than the open-circuit voltage drop from 3.65 V. Meanwhile, when the open-circuit voltage drop, as measured by the method described in the present specification, of the first positive electrode active material manufactured in the manufacturing example from 4.25 V was 0.5 V or less, the voltage drop of the first positive electrode active material at the operating voltage (4.25 V) of the positive electrode material is small, which allows, during charge and discharge cycles, lifespan characteristics to improve while the first positive electrode active material and the second positive electrode active material operate uniformly.

With reference to Table 2 above, it is confirmed that the open-circuit voltage drop from 4.25 V, as measured by the method described in the present specification of the first positive electrode active materials manufactured in Manufacturing Examples 5 and 6 are the greatest, those of the first positive electrode active materials manufactured in Manufacturing Examples 3 and 4 are next, and those of the first positive electrode active materials manufactured in Manufacturing Examples 1 and 2 are the smallest. With reference to Table 1 above, regarding the open-circuit voltage drop from 3.65 V, as measured by the method described in the present specification, the values of the first positive electrode active materials manufactured in Manufacturing Examples 5 and 6 are the greatest, those of the first positive electrode active materials manufactured in Manufacturing Examples 1 and 2 are next, and those of the first positive electrode active materials manufactured in Manufacturing Examples 3 and 4 are the smallest. Therefore, it can be seen that the open-circuit voltage drop from 4.25 V, as measured by the method described in the present specification, has a different tendency from the open-circuit voltage drop from 3.65 V, as measured by the method described in the present specification.

Therefore, it is confirmed that the positive electrode material according to the present invention has technical features thereof in the open-circuit voltage drop according to Equation 1 described in the present specification, which is caused by combined operations of a composition, a particle size, a carbon (C) content in the positive electrode active material, an average crystallite size, and the like.

### Experimental Example 3: Carbon (C) content measurement

A carbon (C) content in each first positive electrode active material was measured, and the carbon content (C) (carbon (C) content of first positive electrode active material (% by weight)) based on the total weight of the first positive electrode active material was listed in Table 3 below.

The carbon content is measured using a carbon-sulfur analyzer (CS844, LECO Corporation). Specifically, the analysis is automatically carried out when 1 g of a positive electrode active material powder sample is taken and placed in a crucible, and the crucible is mounted in a high-frequency induction furnace. C gas of the sample, which is generated in the high-frequency induction furnace, binds to O₂ to generate CO and CO₂. Since C is measured by an infrared detector for CO₂, gas in a CO form completely converts to CO₂ using CuO, and then the C content is measured in the CO₂ state gas using the infrared absorption detector for CO₂.

### Experimental Example 4: Average particle diameter measurement

In order to measure the average particle diameter of each first positive electrode active material and second positive electrode active material used in all examples, the particle size was measured using PSA (Malvern Panalytical Ltd., Mastersizer3000), and the measured results are listed in Table 3 below.

**[Table 3]**

| Classification | First positive electrode active material | Carbon (C) content of first positive electrode active material (wt%) | Average crystallite size of first positive electrode active material (nm) | Average diameter (D₅₀) (µm) | |
|---|---|---|---|---|---|
| | | | | First positive electrode active material | Second positive electrode active material |
| Example 1 | Manufacturing Example 1 | 2.60 | 94.02 | 6.25 | 10 |
| Example 2 | Manufacturing Example 1 | 2.60 | 94.02 | 6.25 | 10 |
| Example 3 | Manufacturing Example 2 | 2.60 | 94.02 | 1.12 | 10 |
| Example 4 | Manufacturing Example 2 | 2.60 | 94.02 | 1.12 | 10 |
| Example 5 | Manufacturing Example 2 | 2.60 | 94.02 | 1.12 | 4 |
| Example 6 | Manufacturing Example 2 | 2.60 | 94.02 | 1.12 | 4 |
| Example 7 | Manufacturing Example 3 | 2.23 | 96.35 | 5.72 | 10 |
| Example 8 | Manufacturing Example 3 | 2.23 | 96.35 | 0.89 | 10 |
| Example 9 | Manufacturing Example 2 | 2.60 | 94.02 | 1.12 | 10 |
| Comparative Example 1 | Manufacturing Example 5 | 1.38 | 174.05 | 6.42 | 10 |
| Comparative Example 2 | Manufacturing Example 5 | 1.38 | 174.05 | 6.42 | 10 |
| Comparative Example 3 | Manufacturing Example 6 | 1.38 | 174.05 | 1.10 | 10 |
| Comparative Example 4 | Manufacturing Example 6 | 1.38 | 174.05 | 1.10 | 10 |
| Comparative Example 5 | Manufacturing Example 2 | 2.60 | 94.02 | 1.12 | 10 |

With reference to Table 3, it was confirmed that the carbon (C) content in the first positive electrode active material used in examples is 1.50% by weight to 5.00% by weight based on the total weight of the first positive electrode active material, and the first positive electrode active material used in the examples have an average crystallite size of 80 nm to 150 nm. In addition, it was confirmed that the first positive electrode active material has an average particle size (D₅₀) of 0.3 µm to 8.0 µm, and the second positive electrode active material has an average particle size (D₅₀) of 4 µm to 13 µm.

### Experimental Example 5: Battery characteristic evaluation 2

### Manufacture of coin-type half-cell

The first positive electrode material of 90% by weight, manufactured according to the examples and comparative examples, carbon black of 5.0% by weight as a conductive material, and polyvinylidene fluoride (PVDF) of 5.0% by weight as a binder were mixed in a N-methyl-2-pyrrolidone (NMP) solvent to manufacture a positive electrode slurry. The manufactured positive electrode slurry was applied onto one side of an aluminum current collector, then dried at 130 °C, and then rolled to manufacture a positive electrode.

A lithium metal electrode was used as a negative electrode, and a porous polyethylene separator was provided between the positive electrode and the negative electrode to manufacture an electrode assembly. The electrode assembly was located inside a battery case, and an electrolyte solution containing 1.0 M of LiPF₆ dissolved in an organic solvent, in which ethylene carbonate (EC): ethyl methyl carbonate (EMC): diethyl carbonate (DEC) were mixed at a volume ratio of 3:4:3, was injected to manufacture a coin-type half-cell.

### Battery characteristic evaluation 2

The coin-type half-cell was charged to 4.25 V using a CC (0.1 C)-CV (Cut off current: 0.05 C) method at 25 °C and discharged to 2.5 V using CC (0.1 C). Thereafter, the cell was charged at 45 °C using a CC(0.33 C)-CV(Cut off current: 0.05 C) method, and discharged to 2.5 V using the CC (0.33 C) method , which was repeated for a total 30 cycles, and resistance was measured through a voltage change over 60 seconds in the first cycle and the 30th cycle. The percentage of the resistance (Ω) in the 30th cycle to the measured resistance (Ω) in the first cycle (resistance increase rate (%)) is listed in Table 4 below.

**[Table 4]**

| Classification | Resistance increase rate (%) @4.25V |
|---|---|
| Example 1 | 5.7 |
| Example 2 | 15.7 |
| Example 3 | 7.2 |
| Example 4 | 16.9 |
| Example 5 | 6.9 |
| Example 6 | 16.4 |
| Example 7 | 6.0 |
| Example 8 | 7.8 |
| Example 9 | 20.5 |
| Comparative Example 1 | 21.1 |
| Comparative Example 2 | 30.2 |
| Comparative Example 3 | 26.8 |
| Comparative Example 4 | 32.5 |
| Comparative Example 5 | 21.1 |

With reference to Table 4, in a case of the lithium secondary battery including the positive electrode materials manufactured in Examples 1 to 9, that is, the lithium secondary battery including the positive electrode material that includes: the first positive electrode active material that meets the specific conditions described in the present specification ((the lithium secondary battery including the positive electrode including a positive electrode active material layer, which includes the first positive electrode active material in an amount of 80% by weight to 98% by weight based on the total weight of the positive electrode active material layer, has a voltage drop (χ) according to Equation of 0.5 V or less); and the second positive electrode active material, a resistance increase rate (%) thereof is lower than that of the secondary battery including: the positive electrode materials manufactured according to Comparative Examples 1 to 4, that is, the positive electrode materials including the first positive electrode materials that do not meet specific conditions described in the present specification; and the second positive electrode active material. Specifically, when including: the first positive electrode active material that does not meet the specific conditions of the present specification; and the second positive electrode active material, the first positive electrode active material and the second positive electrode active material do not operate uniformly, during charging and discharging, due to the large voltage drop of the first positive electrode active material from the operation voltage (4.25 V) of the positive electrode material, and thus, during charging and discharging, the positive electrode material is degraded to thereby increase the resistance increase rate. Meanwhile, it is confirmed that the battery including the positive electrode material (the weight ratio of the first positive electrode active material and the second positive electrode active material is 90:10) manufactured in Example 9 has a higher resistance increase rate than the batteries including the positive electrode materials manufactured in Examples 1 to 8 (the weight ratio of the first positive electrode active material and the second positive electrode active material is 10:90 to 80:20).

In addition, it is confirmed that, in a case of the secondary battery including the positive electrode material manufactured in Examples 1 to 9, that is, the positive electrode material which includes: the first positive electrode active material having an olivine structure; and a second positive electrode active material having a layered structure, a resistance increase rate (%) is low, compared to the secondary battery including the positive electrode material manufactured in Comparative Example 5, that is, the positive electrode material that includes no second positive electrode active material having a layered structure. Specifically, when including the positive electrode material manufactured according to Comparative Example 5, that is, when including the positive electrode material that, without including no second positive electrode active material having a layered structure, includes only the first positive electrode active material having an olivine structure, it is confirmed that the secondary battery including the positive electrode material has a tendency of high resistance increase rate due to rapid deterioration of the positive electrode material in a voltage range exceeding the operating voltage (4.25 V) of the first positive electrode active material.

In conclusion, in a case of the positive electrode material, which includes the first positive electrode active material having an olivine structure and meeting specific conditions described in the present invention; and the second positive electrode active material having a layered structure, it can be seen that even during charging and discharging cycles at an operating voltage of the positive electrode material, the lithium secondary battery including the positive electrode material is relatively stable.

## Claims

1. A positive electrode material comprising:
a first positive electrode active material having an olivine structure; and
a second positive electrode active material having a layered structure,
wherein the first positive electrode active material has a voltage drop (χ) of 0.50 V or less, according to Equation 1 below: [Equation 1] 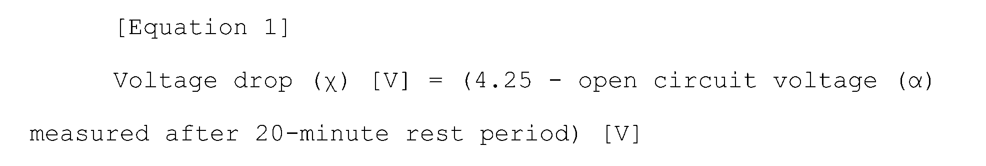 Voltage drop (χ) [V] = (4.25 - open circuit voltage (α) measured after 20-minute rest period) [V]
where, in Equation 1 above, α is an open-circuit voltage, measured immediately after charging a lithium secondary battery including a positive electrode including a positive electrode active material layer that contains a positive electrode active material in an amount of 80% by weight to 98% by weight based on the total weight of the positive electrode active material layer to 4.25 V at 25°C using the CC (0.1 C) - CV (Cut off current: 0.05 C) method and having a 20-minute resting period.

2. The positive electrode material of claim 1, wherein the first positive electrode active material comprises a lithium iron phosphate-based compound having a composition represented by Formula 1 below:
[Formula 1] Li₁₊ₓFe₁₋ₐM¹ₐPO₄
where, in Formula 1 above,
M¹ is one or more selected from Al, Mg, Ni, Co, Mn, Ti, Ga, Cu, V, Nb, Zr, Ce, In, Zn, Na, Si, Ca, B, and Y, and
-0.1≤x≤0.1, and 0.0≤a≤0.8.

3. The positive electrode material of claim 2, wherein the first positive electrode material further comprises a coating layer containing carbon (C) formed on the lithium iron phosphate-based compound.

4. The positive electrode material of claim 3, wherein a carbon (C) content contained in the coating layer is 1.50 wt% to 5.00 wt% based on the total weight of the first positive electrode active material.

5. The positive electrode material of claim 1, wherein the first positive electrode active material has an average crystallite size of 80.00 nm to 150.00 nm.

6. The positive electrode material of claim 1, wherein the first positive electrode active material has an average particle diameter (D₅₀) of 0.30 µm to 8.00 µm.

7. The positive electrode material of claim 1, wherein a weight ratio of the first positive electrode active material and the second positive electrode active material is 10:90 to 90:10.

8. The positive electrode material of claim 1, wherein a weight ratio of the first positive electrode active material and the second positive electrode active material is 10:90 to 80:20.

9. The positive electrode material of claim 1, wherein the second positive electrode active material has a composition represented by Formula 2 below:
[Formula 2] Li_{1+y1}Niₚ₁Mn_{q1}Coᵣ₁M²ₛ₁O₂
where, in Formula 2 above,
M² is one or more selected from Zr, Al, Re, V, Cr, Fe, Ga, Si, B, Ru, Ti, Nb, Mo, Mg, W, Na and Pt, and
0.00≤y1≤0.50, 0.00<p1<1.00, 0.00<q1<0.50, 0.00<r1<0.50, and 0.000≤s1≤0.010.

10. The positive electrode material of claim 1, wherein the second positive electrode active material has an average particle diameter (D₅₀) of 4 µm to 13 µm.

11. A positive electrode comprising the positive electrode material according to any one among claim 1 to claim 10.

12. A lithium secondary battery comprising the positive electrode according to claim 11.
